# EUROPEAN PATENT SPECIFICATION

(11) **EP 4 463 586 B1**
(45) Date of publication and mention of the grant of the patent: **16.09.2026**
(21) Application number: 23703638.9
(22) Date of filing: 09.01.2023
(51) Int. Cl.: D01F 13/04, B29B 17/02, C08J 11/06, D01G 11/00, D01G 21/00

(54) **METHOD FOR REGENERATING CLOTHING MANUFACTURING WASTE COMPRISING SYNTHETIC FIBERS AND PLASTIC MATERIAL**
VERFAHREN ZUR REGENERIERUNG VON BEKLEIDUNGSHERSTELLUNGSABFÄLLEN MIT SYNTHETISCHEN FASERN UND KUNSTSTOFFMATERIAL
PROCÉDÉ DE RÉGÉNÉRATION DE DÉCHETS DE FABRICATION DE VÊTEMENTS COMPRENANT DES FIBRES SYNTHÉTIQUES ET UNE MATIÈRE PLASTIQUE

(30) Priority: 10.01.2022 IT 202200000206
(43) Date of publication of application: 20.11.2024
(73) Proprietor: Grub S.r.l., 24126 Bergamo (BG) (IT)
(72) Inventor: MICHELACCI, Francesco, 59013 Montemurlo (IT)
(74) Representative: Savi, Massimiliano
(86) International application number: PCT/IB2023/050158
(87) International publication number: WO 2023/131919

(56) References cited:
- WO-A1-2020/252523
- WO-A2-2017/155757
- US-B2- 9 873 212

## Description

### FIELD OF THE INVENTION

The present invention relates to the field of regenerating clothing manufacturing waste from the textile industry. In particular, the present description relates to a method for regenerating processing and clothing manufacturing waste, consisting of synthetic fibers, mainly polyester fibers, or artificial fibers and of plastic material, for the production of polyester-only textile fibers in which the polymers of plastic material have been totally eliminated.

### BACKGROUND ART

In recent decades, the clothing market has seen a steady increase in the use of synthetic and artificial fibers to the detriment of natural fibers such as cotton, animal fibers, etc. In particular, it is estimated that polyester fiber represents about 50% of the fibers used for the global production of clothing today.

Clothing items made of orthogonal or shuttle-woven and knitted fabric, discarded, and the related processing waste are destroyed or regenerated in order to obtain reusable textile fibers.

Shuttle-woven and knitted fabrics consisting of natural fiber (of animal origin such as wool or of vegetable origin such as cotton, ramie, linen, etc.), synthetic fiber (such as polyester or polyamide fiber), artificial fiber (synthetic fibers of artificial origin such as acrylic fiber, very similar to wool) or even intimate mixtures of the aforesaid fibers, originating, as mentioned, from textile processing waste (for example waste from spinning preparation or spinning or weaving or finishing), clothing manufacturing waste or cutouts, production redundancies (known as pre-consumer waste) or discarded clothing items (known as post-consumer waste) can be regenerated. Fabric regeneration treatments are increasingly used due to the constant increase in the cost of synthetic and artificial raw materials used in the production of fabrics and the often difficult availability of these raw materials on the market. Furthermore, fabric regeneration has become increasingly important also due to the complexity and increasing difficulty of disposing of large amounts of textile processing waste or textile or textile products, which mainly consist of synthetic fibers (mainly polyester fibers).

The regeneration processes in use are essentially physical-mechanical processes, and can only be successfully used on shuttle-woven or knitted synthetic fiber fabrics which have not undergone coupling and lamination processes with membranes or films of polyurethane or other synthetic material. In fact, the known regeneration processes are not applicable to textile waste from finishing or clothing manufacturing processes comprising a plurality of layers (typically two- or three-layer fabrics) and produced by coupling processes by coating and lamination.

The aforesaid coupling processes are generally carried out by textile processes of various types adapted to join a base fabric, for example with orthogonal weave or knitted, with another fabric or with a membrane or a film of synthetic material. Many techniques can be used. The main ones are the so-called coating technique and the so-called lamination technique.

Two fabrics can be coupled by means of these techniques, or a fabric and a film or a membrane.

The coating process includes depositing adhesive chemicals on the surface of one of the two fabrics by means of a special coating unit provided with a precision doctor blade.

The coating can be carried out on the cylinder when the doctor blade is positioned at a very short and very precise distance from the fabric wound on the cylinder, which distance is sometimes adjusted by micrometers, which determines the thickness of the adhesive during the application thereof. A cylinder having a controlled movement and an adjustable position has the task of feeding the fabric and supporting it at the point where the coating occurs. The fabric is then wrapped around the controlled cylinder for a predetermined number of degrees and subjected to the coating process.

Alternatively, the coating can occur in the air. In this case, again, the doctor blade is positioned at a minimum predetermined distance from the fabric to be coated. Therefore, the fabric is not supported in the coating point, is not supported by any mechanical element, therefore the coating occurs "in the air." The fabric is led and held under tension by two controlled cylinders (the first feeding and the second braking).

A third coating mode occurs through what is known as "reverse roll." In this case, the coating unit is provided with a mechanical element referred to as a thousand-point cylinder. The fabric is threaded over this thousand-point cylinder and is kept more or less under tension by means of two controlled cylinders, one placed upstream of the coating point and one downstream. The thousand-point cylinder is made from a tube of a certain thickness, milled and then ground on the outer surface thereof. The milling is carried out along both external circumferences parallel to the base circumference and some of the generatrices thereof. This mechanical processing with chip removal defines a pattern, on the outer surface of the cylinder, which is determined by a series of grooves on the entire surface thereof. The adhesive is deposited inside these grooves, whereby the more grooves are present on the cylinder, the more points of the fabric on which the adhesive chemical is brought. The deeper the grooves, the greater the amount of adhesive brought on the fabric, obviously at the same fabric feeding speed. The coating occurs by virtue of the controlled thousand-point cylinder which, rotating, more or less immerses itself in the adhesive tray, in relation to the amount of product to be brought on the fabric and the fabric feeding speed. The immersion of the thousand-point cylinder occurs on a predefined portion of the length thereof as a function of the height of the fabric to be coated. These adjustments must be very precise and are performed by the operator in relation to the various coating parameters decided by the textile technicians who designed the fabric. The chemical adhesive is continuously pumped into the tank so as to maintain the required amount.

The coating is carried out on only one side of the fabric, usually the reverse thereof, on which the second layer of fabric, or a membrane or a film, is coupled.

The coating units are usually installed at the inlet of a dryer with a chain, referred to as a special dryer, in the drying and finishing chambers of which jets of hot air cover the coupled fabric by forced convection and heat it. The air hitting the coupled fabric is heated by means of a heating system, for example of the steam or diathermic oil or indirect gas type. After the fabric has been coupled to the membrane or film, thus becoming a two-layer fabric, it is then transported by the chains of the special dryer into the drying chambers, where the thermo-adhesive melts and the water contained in the adhesive compound rapidly evaporates, thus causing the fabric to tenaciously adhere to the plastic film or membrane.

A calendering process after the above described coupling by coating is often incorrectly referred to as a lamination process, in which the two-layer fabric exiting from the special dryer is transferred to a machine - precisely referred to as a calender - where the coupled fabric undergoes a further high-temperature pressing process after which the adhesive further welds the two layers of the coupled fabric in a highly firm and substantially permanent manner.

A possible problem of the coated and then calendered couplings is the minimal presence of draping in the coupling. However, this problem can be solved by distributing the adhesive in the form of a large number of small dots (known as thousand points), thus simultaneously ensuring anchoring, breathability and draping to the multilayer fabric obtained.

As an alternative to the coating coupling described above, a fabric can be coupled with a film or with a membrane by thermal coupling. In this case, the appropriately pre-treated plastic film or membrane is melted on the surface of the fabric during the hot passage in a felt calender, by means of a treatment referred to as a lamination. During this treatment the thermo-adhesive arranged on the film or membrane by an upstream processing is activated and, by virtue of the considerable pressure of the felt calender cylinder and the long stay in the calender (usually 20 - 25 seconds), it manages to join the fabric to the film or membrane with surprising tenacity. Coupled fabrics obtained by lamination are generally more expensive than fabrics obtained by means of simple coatings but have different features and performance. Through lamination, for example, it is possible to obtain holographic fabrics which have three-dimensional effects or fabrics which refract or reflect light, which are in great demand in both safety clothing and fashion.

Both laminated coupled fabrics and coupled fabrics obtained by coating can be made breathable using microporous or hydrophilic membranes.

A microporous membrane is characterized by many small holes which, for example, allow the passage of the water vapor emitted when sweating, but at the same time prevent the penetration of wind and rain. A hydrophilic membrane, on the other hand, attracts water vapor from sweating and allows it to pass to the cooler environment outside the garment.

A possible drawback of the fabrics obtained by lamination occurs in the case of high coverage of the adhesive, as the resulting fabrics risk lacking drape.

In all the multilayer fabrics of the background art, the presence of a layer - usually consisting of a membrane or a film - generally very elastic and firmly glued to a polyester fabric by means of the coupling processes seen previously, does not allow the regeneration of the multilayer coupled material to be carried out using regeneration machines which exploit physical-mechanical processes such as, for example, fraying machines, or Garnett machines or what is known as openers, because the product attaches to the metal and rigid seals of this type of machines and prevents the correct operation thereof.

Due to this problem, the regeneration of the coupled fabric operated by these machines is resolved in a very low amount of useful material, which is, moreover, characterized not by distinct textile fibers obtained from each layer of the coupled fabric but by a mixture of polyester and polyurethane fibers still firmly joined together. Therefore, the product obtained has little interest for the possible reuse thereof in textile processing. Patent document US9873212 describes a process for the treatment of technical textiles based on thermoplastic fibers and comprising a coating, such as, in particular, airbags, using the principle of centrifugal decanting to separate the fiber residues and the coating material. Patent document WO 2017/155757 relates to an example of apparatus for quality deconstruction of textile waste materials which comprises an initial feedbox or hopper, a feedbox conveyor, one or more than one serially-connected treatment/deconstruction groups, an outlet conveyor, and a centralized computer controller. Patent document WO 2020/252523 relates to a system and process for separation and recycling of blended polyester and cotton textiles (or other regenerated cellulosic fibre textile fabric) on a commercial scale.

Therefore, the need to have a process to separate and destroy the film or membrane - of plastic materials such as polyurethane - coupled or laminated with a shuttle-woven or knitted fabric - for example made of 100% polyester - which allows reusing the waste material from clothing manufacturing cutouts and then transforming it into textile fiber is clear, suitable for the complete re-insertion thereof into the production cycle in a completely circular manner, transforming this initial waste product into a resource, respecting the standards imposed by the GRS (Global Recycled Standard).

### BRIEF DESCRIPTION OF THE INVENTION

The present invention relates to a system and method for regenerating clothing manufacturing waste comprising synthetic and/or artificial fibers (hereinafter referred to simply as synthetic fibers) and plastic material.

Said clothing manufacturing waste, hereinafter simply referred to as waste, can comprise, for example, fabrics with orthogonal weave (shuttle) or knitted fabrics, made of 100% polyester by weaving by means of circular machines, or by means of Raschel frames, (fabrics commonly referred to as warp knitting), and then coupled with a polyurethane membrane or film using dimethylformamide as an adhesive or using other adhesives having similar properties. Other types of clothing manufacturing waste can however be successfully treated by the present invention, such as knitted fabrics, fabrics woven by means of special circular machines and commonly referred to as polyester "fleece" coupled with polyurethane films or membranes, shuttle-woven nylon fabrics commonly referred to as "taffeta" coupled with polyurethane films or membranes or with films or membranes consisting of another plastic material, shuttle-woven cotton/nylon blend fabrics always coupled with polyurethane films or membranes or with films or membranes consisting of another plastic material.

In a preferred embodiment, the method according to the present description includes two distinct treatments operated in sequence: a first chemical-physical treatment of the waste to carry out the separation of the polyester fabric from the polyurethane film or membrane, and a second physical-mechanical treatment aimed at obtaining the polyester fiber.

Said first chemical treatment is adapted to obtain crystallization and a partial pulverization of the polyurethane membrane or film to which the polyester fabric was coupled. Therefore, this first treatment allows obtaining an almost total separation of the polyester from the plastic material (film or membrane), of which only a few small, crystallized particles remain partially glued to the polyester fabric cutouts. This process is preferably carried out discontinuously in a pressurized apparatus or in an autoclave, adapted to carry out textile treatments under pressure and at high temperature. The textile cutouts to be treated are introduced into the pressurized apparatus, or into the autoclave, and subjected to a high-temperature alkaline bath. The fabrics are then centrifuged to extract the liquid substance with which they are soaked and then subjected to drying. The drying can occur discontinuously by means of a static hot air dryer or in a free-standing dryer which works continuously, and removes moisture from the treated fabrics as well as pulverizes the most crystallized parts of the membrane or polyurethane film which have completely detached from the polyester base fabric, which detachment and crystallization were obtained during the alkaline chemical treatment in the pressurized apparatus or autoclave.

The subsequent mechanical treatment is mainly carried out by an apparatus comprising a two-drum opener and at least one condenser arranged in cascade with respect to said two-drum opener.

The material to be treated is conveyed into the two-drum opener, for example by means of a loading device adapted to arrange the material to be treated on a mat or a conveyor belt to be processed by the drums of the opener.

At the output of the two-drum opener, the treated material is conveyed to the condenser by, for example, a pneumatic transport which occurs through metal pipes associated with open-bladed fans. A second condenser can be employed in cascade to the first capacitor. The presence of the second condenser cascading to the first can be required in case of large amounts of membrane dust or polyurethane film coming from the previous treatment steps.

The aforesaid two-drum opener is adapted to perform a mechanical action of fraying and total pulping on the material to be treated. The condenser or condensers are instead adapted to discard the few residues of adhesive and polyurethane film or membrane which, crystallized during the chemical-physical treatment step, had not yet, at some point, completely detached from the underlying fabric as a result of the fraying and pulping step, carried out by the two-drum opener. The fraying containing both the polyester fibers and the last few parts of the crystallized film or membrane and not yet completely separated from the polyester base fabric, is then cleaned by the latter through the operation of the condenser, which frees the regenerated polyester fibers from the polyurethane dust still present.

From these treatments carried out in sequence, the material exits in the form of only polyester fiber which can be processed again in the textile production cycle.

### BRIEF DESCRIPTION OF THE DRAWINGS

Further features and advantages of the invention will become apparent from reading the following detailed description, given by way of a non-limiting example, with the aid of the figures shown in the accompanying drawings, in which:
Fig. 1 shows a functional block diagram of a preferred embodiment of the coupled fabric recycling chemical apparatus according to the present invention.

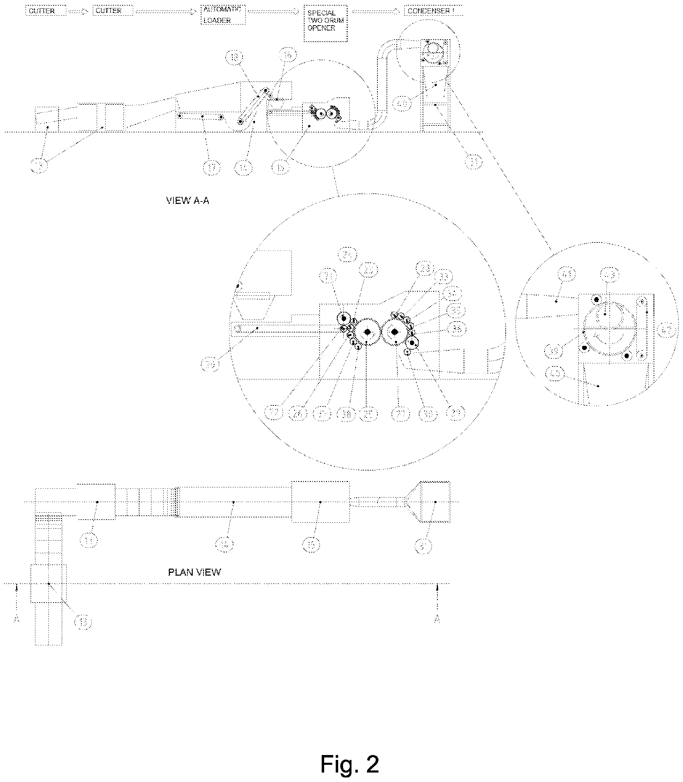

Fig. 2 shows a functional block diagram of another preferred embodiment of the coupled fabric recycling physical-mechanical apparatus according to the present invention.

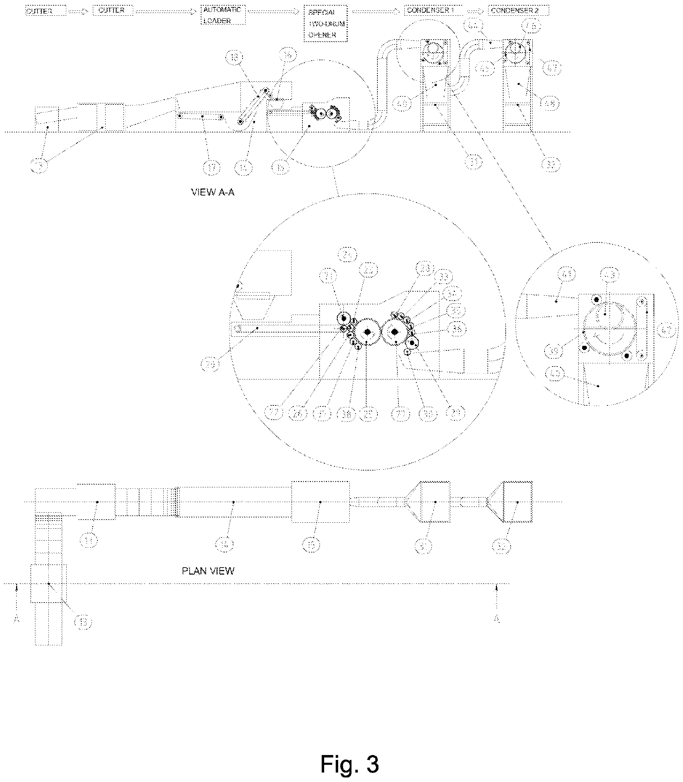

Fig. 3 shows a functional block diagram of another preferred embodiment of the coupled fabric recycling physical-mechanical apparatus according to the present invention.

The following description of exemplary embodiments relates to the accompanying drawings. The same reference numerals in the various drawings identify the same elements or similar elements. The following detailed description does not limit the invention. The scope of the invention is defined by the appended claims.

### DETAILED DESCRIPTION OF THE INVENTION

The method and system according to the present description are aimed at the treatment of coupled or laminated fabric originating, for example, from clothing manufacturing and finishing waste or cutouts, from production redundancies (so-called pre-consumer waste) or from disposed clothing items (so-called post-consumer waste). Said waste can comprise, for example, an orthogonal weave (shuttle) or knitted fabric (circular knitwear or warp knitwear) made of polyester, coupled to a membrane to a film made of plastic material such as polyurethane.

In a preferred embodiment, the method according to the present description includes two distinct treatments operated in sequence: a first chemical treatment of the waste adapted to carry out the almost total separation of the polyester fabric from the film or the membrane of plastic material, for example polyurethane, to which it has been coupled, and a second physical-mechanical treatment aimed at obtaining the polyester fiber.

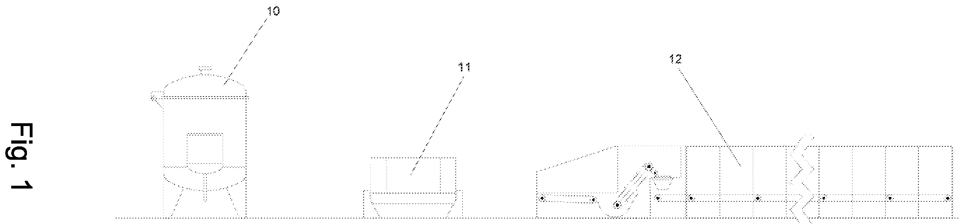

The first chemical treatment which is carried out on the waste to be treated is designed to cause the almost total crystallization of the polyurethane and the almost complete melting of the adhesive which glues the polyurethane film or membrane to the polyester fabric. This treatment then generates an almost total crystallization of the polyurethane film or membrane and an almost complete detachment of the polyurethane layer to which the polyester fabri has been coupled. With reference to the attached Fig. 1, said first chemical-physical treatment is carried out by introducing the waste to be treated in an alkaline bath having a pH of at least 8. The waste is loaded into a special material holder which is placed inside an autoclave 10 or similar device capable of achieving high pressure and high temperature conditions therein. For example, the autoclave can be chosen from the type used to carry out high-pressure and high-temperature treatments of textile fibers such as dyeing, bleaching and other treatments usually carried out on fibers, flakes, tops, spools and other textile products.

The working temperature of said autoclave 10 is preferably greater than or equal to 100°C and the alkaline bath must be performed by imposing a bath ratio (defined as the ratio, by weight, between the amount of the bath liquid and the amount of the waste to be treated immersed in the bath) typically between 1:5 and 1:20, depending on the amounts and dimensions of the waste to be treated.

After the autoclave treatment, which typically lasts about 2h30' - 3h, the waste is subjected to a treatment to extract the liquid with which it is soaked. For example, the waste can be introduced into a centrifuge 11 so as to extract from the waste a certain amount of the liquid with which it is soaked.

After the treatment in a centrifuge (or similar device) it is typically possible to remove 30% to 40% of the liquid with which the waste is soaked at the output of the autoclave 10.

The waste is then sent to a drying device 12 where the residual liquid is removed and the polyurethane film (or membrane) of the waste, which has crystallized during the chemical treatment in the autoclave, tends to separate almost totally from the polyester fabric, leaving only a few small particles glued to the polyester base fabric. Said drying device can be made by means of a static dryer if small amounts of waste must be processed discontinuously.

A static dryer usually consists of a chamber in which the waste container to be treated is placed. Inside it, by means of the production of jets of hot air facing the waste, these are dried. Both the internal temperature of the static dryer chamber and the dwelling time of the waste to be treated therein can be programmed by the operator.

For larger amounts of waste to be treated, said drying device can be made by means of a free dryer or continuously operating dryer. In this case, the waste to be treated is loaded onto a moving belt, for example made with perforated stainless steel slats, using a special automatic loader. The moving belt is placed so as to cross the drying chamber and proceeds at a speed which can be set by the operator. It is possible to program both the temperature of the hot air which hits the waste to be treated inside the free dryer, and the temperature inside the dryer chamber, as well as the dwelling time of the waste in the chamber, varying the belt advancement speed. The temperature inside said drying device 12 is preferably set at a value above 90°C.

The chemical treatment described makes the waste to be treated suitable to undergo the subsequent mechanical action.

In a preferred embodiment of the present invention, said mechanical treatment occurs through a first processing of the waste at the output of said drying device 12, carried out through at least one cutting device 13 adapted to cut and break the waste into fragments of the desired size. Said at least one cutting device 13 can be made by means of a rotary or guillotine cutting machine or, in the case of textile waste of considerable size, by two cutting machines positioned in cascade, with the first preferably positioned at 90° with respect to the second. At the output of said at least one cutting device 13, the waste to be treated, cut in the required dimensions, is unloaded onto the conveyor belt of an automatic loader 14, which can be advantageously provided with tips for a better feeding of the waste. The automatic loader in turn conveys the waste to be treated onto the conveyor belt of a two-drum opener 15.

To solve any problems related to the electrostatic charges accumulated by the polyester fiber waste to be treated, which can make subsequent processing more difficult, a device 16 can be mounted at the output of the automatic loader 14 to spray and impregnate the waste with antistatic product. The waste to be treated is thus impregnated with this product and is thus rendered antistatic, avoiding possible tangles on the seals of the two-drum opener 15 and contamination and clogging of the ducts carrying the material to be treated to the downstream condensing device 31 or condensing devices 31, 32.

In further detail, in a preferred embodiment said automatic loader 14 comprises a first controlled horizontal conveyor belt 17, downstream of which a drawer deposit adapted to accommodate the cut waste is positioned. A second controlled conveyor belt 18 (also referred to as a trellis), inclined with respect to the ground, feeds, by means of special rigid and protruding metal tips, the waste and transports it from the drawer deposit towards the two-drum opener 15. Said first conveyor belt 17 and second conveyor belt 18 can advantageously be provided with rigid metal tips adapted to improve the feeding of waste.

At the output of the automatic loader 14 there can be a special device, for example in the form of a spatula or rotating comb, adapted to detach the waste from the conveyor belt and to unload it into a conveyor in the form of a hopper which in turn leads said waste onto the conveyor belt 20 of the two-drum opener 15.

This conveyor belt 20 is adapted to lead the material to be treated to a pair of introducer cylinders 21, 22 usually grooved by milling and then ground along some generatrices thereof. These cylinders are usually grooved to have a greater grip on the waste to be treated. The conveyor belt 20, in turn, can consist of a plurality of metal strips appropriately hinged to each other.

The axes of this pair of introducer cylinders 21, 22 are arranged in parallel on a same plane, which is substantially orthogonal to the horizontal plane where the conveyor belt 20 is located. Said controlled introducer cylinders 21, 22 rotate one counterclockwise and the other clockwise and exert a pressure on the waste cut and to be pulped, and at the same time supply them to the next stage as if they formed a press consisting of controlled squeezing cylinders. The mutual approach distance and the pressure between said two introducer cylinders 21, 22 are adjustable. The linear feeding speed of the next stage by said introducer cylinders 21, 22, typically equal to 3 mt/min, is also adjustable.

The waste is then treated by two controlled pulper cylinders 23, 24, which rotate clockwise and are covered externally by rigid metal seals with a longitudinal section which is preferably sawtooth and preferably a flat cross-section.

During operation the two introducer cylinders 21, 22 supply the waste to said two controlled pulping cylinders 23, 24, which, in turn, by virtue of the greater peripheral speed thereof than that of the two introducer cylinders 21, 22 and by virtue of the surface seal thereof and the rotation direction thereof, tear and pulp the material received by the two introducer cylinders 21, 22 and supply the partially pulped material to a first drum 25, which preferably has a diameter of about 600 mm and preferably rotates counterclockwise at a speed of about 225 revolutions per minute. Said first drum 25 is preferably provided with a rigid metal surface seal having a sawtooth longitudinal section and a flat cross-section.

Downstream of said controlled pulping cylinders 23, 24, and also associated and facing the first drum 25, there is at least one first worker cylinder 26. In a preferred embodiment of the invention, downstream of said controlled cylinders 23, 24, there are three first worker cylinders 26, 37, 38 associated with and facing the first drum 25. Preferably said three first worker cylinders 26, 37 and 38 have the same dimensions as the controlled pulping cylinders 23 and 24 and are also covered on the outer surface thereof by a seal having a sawtooth longitudinal section and a flat cross-section.

Furthermore, said three first worker cylinders 26, 37 and 38 rotate clockwise like the controlled pulper cylinders 23 and 24, and have the function of removing the twist from the threads generated by pulping the waste and conducted to the drum 25. The peripheral speed of said first worker cylinders 26, 37 and 38, finally, is preferably higher than that of the first drum 25.

In a preferred embodiment, the mutual distance between said controlled pulper cylinders 23 and 24 and said first worker cylinders 26, 37 and 38, and the distance between said cylinders and the drum 25 is the same, preferably of the order of a few tenths of a millimeter.

Said first drum 25 transfers the material received from said controlled cylinders and first worker cylinders to a second drum 27 positioned downstream. The second drum 27 preferably has the same dimensions as the first and rotates clockwise at a peripheral speed which can advantageously be chosen higher than that of the first drum 25, and such as to generate a material recall action. Said second drum 27 is also preferably covered, on the outer surface thereof, by a seal with a sawtooth longitudinal and flat transverse section.

Facing said second drum 27 there are second worker cylinders, preferably in the number of five 28, 33 - 36, adapted to rotate counterclockwise and preferably of the same size as the first worker cylinders associated with the first drum 25.

Said second worker cylinders 28, 33 - 36 are preferably covered by a sawtooth longitudinal section and flat transverse seal and carry out, with respect to the second drum 27, the same function said first worker cylinders 26, 37, 38 carry out with respect to the first drum 25.

Preferably, the seals of said first worker cylinders 26, 37, 38 and said second worker cylinders 28, 33 - 36 have different dimensions with respect to the seals of said first drum 25 and second drum 27. The transverse section of the sawtooth of the seal mounted on the worker cylinders has a lower thickness than that installed on said first and second drums 25, 27. This lower thickness results in a cover per inch density of the seal covering the worker cylinders which is greater with respect to the seal mounted on the first drum 25. Furthermore, the sawtooth angle of the seals mounted on the cylinders and drum can also be different.

At the output of the second drum 27, a flywheel cylinder 29 is mounted having a larger diameter with respect to the worker cylinders. Said flywheel cylinder 29, preferably has a peripheral speed, with respect to the second drum 27, which is greater by about 20% - 30%, rotates counterclockwise and can be advantageously covered by a particular elastic metal seal adapted to penetrate the seal of the second drum 27, generating a recall and therefore suction action on the fibers of the scraps sunk in the seal of the drum 27.

Downstream of the flywheel cylinder 29 and below it, a controlled unloading cylinder or comb cylinder 30 is installed, which has the function of unloading the processed and pulped waste into a hopper from which the material is transferred by means of a pneumatic transport to a condenser 31, possibly connected to a second condenser 32 in cascade.

During the operation of the apparatus according to the invention, the first drum 25 receives the waste to be treated from the first worker cylinders 26, 37, 38, transports it for a certain arc and then transfers it to the second drum 27 which preferably has a higher peripheral speed than that of the first drum 25. The waste is then transferred from the second drum 27 to the associated second worker cylinders 28, 33 - 36 and is led to a flywheel cylinder 29 which captures it and withdraws it from the drum 27. At this point, the pulped polyester fibers from the treated waste are still accompanied by a small percentage of dust which must be separated and completely eliminated. By virtue of the different peripheral speeds between the comb cylinder 30 and the flywheel cylinder 29, the latter transfers the material to the comb cylinder 30 which, in turn, unloads the material into a hopper. From this hopper, finally, the treated waste is transported, for example by means of a pneumatic transport, to a condenser apparatus 31 and then to a second condenser 32 in cascade, if present. Said condenser 31 is adapted to eliminate the small residual part of the dust from the treated waste. In a preferred embodiment said condenser comprises a rotating metal drum 39, generally made of a stainless steel sheet, calendered and heat-sealed, and perforated on the outer surface. In a preferred embodiment of the invention, said rotating metal drum 39 has a diameter of about 650 mm. The introduction of the material to be treated into the condenser 31 occurs through a cone 41 made of preferably galvanized steel sheet.

A suction system is connected to the rotating metal drum 39 by means of a suitable cone 43 made of galvanized material. By virtue of the suction carried out inside the perforated metal drum 39, the dust residues to be eliminated which are still present in the treated waste, are sucked into the perforated drum 39 and sent, for example by pneumatic transport, to a collection and filtration system, for example a sleeve filter, for the subsequent disposal thereof.

The resulting pure synthetic fibers remain on the outer surface portion of the perforated drum 39 until suitable collection means, for example a rotating unloading pad 42, cause them to detach from the outer surface of the rotating drum 39 resulting in the falling thereof by gravity into a collection hopper 40. Said rotating unloading pad 42 can be mounted on a guide cylinder and on a controlled cylinder and installed inside the condenser 31 in a vertical position and opposite the cone 41 made of steel sheet from which the waste is introduced into the condenser 31.

From said collection hopper 40, the collected material can possibly be transferred to a second condenser apparatus 32 configured like said condenser 31 and also provided with a metal cone 44 for the introduction of the material at the inlet of the condenser 32, a rotating metal drum perforated in surface 45, a pad 47 for unloading the synthetic fibers in the pure state, a cone 46 for the suction placed inside the rotating drum perforated on its outer surface 45 and a hopper 48 for the final collection of the synthetic fibers in the pure state.

At the output of the last condenser, finally, the synthetic fibers in their pure state can be transported, for example again by means of a pneumatic transport, to a packaging press.

## Claims

1. A system for regenerating clothing manufacturing waste including synthetic and/or artificial fibers and plastic material, comprising a first apparatus for a first chemical treatment of said waste and a second apparatus for a subsequent second mechanical treatment of said waste, wherein said first apparatus comprises an autoclave (10) adapted to treat said waste immersed in an alkaline liquid bath, a centrifuge (11) adapted to extract from the waste at least part of said liquid in which the waste is soaked, and a drying device (12) adapted to remove the residue of said liquid from said waste, and said second apparatus comprises a two-drum opener (15) adapted to fray and pulp said waste, and at least one condenser (31) adapted to remove the residues of said plastic material from said waste.

2. A system according to claim 1, wherein said second apparatus comprises two condensers (31, 32) arranged in cascade.

3. A system according to one or more of claims 1 to 2, wherein said alkaline bath is **characterized by** a bath ratio, defined as the weight ratio of the amount of bath liquid to the amount of waste to be treated immersed in the bath, between 1:5 and 1:20.

4. A system according to one or more of claims 1 to 3, wherein the working temperature of said autoclave (10) is higher than or equal to 100°C.

5. A system according to one or more of claims 1 to 4, wherein said drying device (12) comprises a static hot-air dryer.

6. A system according to one or more of claims 1 to 4, wherein said drying device (12) comprises a free dryer which operates continuously.

7. A system according to one or more of claims 1 to 6, comprising at least one cutting device (13) arranged upstream of said two-drum opener (15) and adapted to cut and break said waste into fragments.

8. A system according to one or more of claims 1 to 7, comprising an automatic loader (14) arranged between said at least one cutting device (13) and said two-drum opener (15).

9. A system according to one or more of claims 1 to 8, comprising a device (16) for spraying an antistatic product on said waste being processed.

10. A system according to one or more of claims 1 to 9, wherein said two-drum opener (15) comprises a conveyor belt (20) adapted to supply the waste being processed to a plurality of cylinders comprising a pair of introducer cylinders (21, 22), a pair of pulper cylinders (23, 24) associated with and facing a first drum (25), a plurality of first worker cylinders (26, 37, 38) associated with and facing said a first drum (25), a plurality of second worker cylinders (28, 33 - 36) associated with a second drum (27) in turn associated with said first drum (25), a flywheel cylinder (29) associated with said second drum (27), and a comb cylinder (30) associated with said flywheel cylinder (29).

11. A system according to one or more of claims 1 to 10, wherein said at least one condenser (31, 32) comprises a rotating metal drum (39, 45) perforated on the outer surface and provided with suction means and collection means adapted to convey the dust residues of the waste from the surface of the metal cylinder to a collection hopper (40, 48).

12. A system according to the preceding claim, wherein said collecting means comprise a rotating unloading pad (42).

13. A system according to one or more of claims 1 to 12, wherein said autoclave is of the type used to carry out high-pressure and high-temperature treatments of textile processing waste, textile clothing manufacturing cutouts, and textile fibers.

14. A method for regenerating clothing manufacturing waste including synthetic fibers and plastic material, comprising a first chemical treatment and a subsequent second mechanical treatment of said clothing manufacturing waste; said first chemical treatment comprising an alkaline bath in an autoclave, a centrifugation and a drying; said second mechanical treatment comprising a fraying and pulping step and a step of removing the residues of said plastic material.

15. A method according to the preceding claim, wherein said fraying and pulping step is carried out by a two-drum opener (15) and wherein said step of removing the residues of said plastic material is carried out by at least one condenser (31).

## Patentansprüche

1. System zur Regenerierung von Bekleidungsherstellungsabfällen, die synthetische und/oder künstliche Fasern und Kunststoffmaterial enthalten, umfassend eine erste Vorrichtung für eine erste chemische Behandlung der Abfälle und eine zweite Vorrichtung für eine anschließende zweite mechanische Behandlung der Abfälle, wobei die erste Vorrichtung einen Autoklaven (10), der dazu ausgelegt ist, die in einem alkalischen Flüssigkeitsbad eingetauchten Abfälle zu behandeln, eine Zentrifuge (11), die dazu ausgelegt ist, zumindest einen Teil der Flüssigkeit, in der die Abfälle eingeweicht sind, aus den Abfällen zu extrahieren, und eine Trocknungseinrichtung (12) umfasst, die dazu ausgelegt ist, den Rückstand der Flüssigkeit aus den Abfällen zu entfernen, und wobei die zweite Vorrichtung einen Trommelöffner mit zwei Trommeln (15), der dazu ausgelegt ist, die Abfälle zu zerfasern und aufzuschließen, und mindestens einen Kondensator (31) umfasst, der dazu ausgelegt ist, die Rückstände des Kunststoffmaterials aus den Abfällen zu entfernen.

2. System nach Anspruch 1, wobei die zweite Vorrichtung zwei kaskadenförmig angeordnete Kondensatoren (31, 32) umfasst.

3. System nach einem oder mehreren der Ansprüche 1 bis 2, wobei das alkalische Bad durch ein Flottenverhältnis gekennzeichnet ist, definiert als das Gewichtsverhältnis der Menge an Badflüssigkeit zur Menge der zu behandelnden, im Bad eingetauchten Abfälle, das zwischen 1 : 5 und 1 : 20 liegt.

4. System nach einem oder mehreren der Ansprüche 1 bis 3, wobei die Arbeitstemperatur des Autoklaven (10) höher als oder gleich 100 °C ist.

5. System nach einem oder mehreren der Ansprüche 1 bis 4, wobei die Trocknungseinrichtung (12) einen statischen Heißlufttrockner umfasst.

6. System nach einem oder mehreren der Ansprüche 1 bis 4, wobei die Trocknungseinrichtung (12) einen frei arbeitenden Trockner umfasst, der kontinuierlich arbeitet.

7. System nach einem oder mehreren der Ansprüche 1 bis 6, umfassend mindestens eine Schneideinrichtung (13), die dem Trommelöffner mit zwei Trommeln (15) vorgelagert angeordnet und dazu ausgelegt ist, die Abfälle in Fragmente zu schneiden und zu zerkleinern.

8. System nach einem oder mehreren der Ansprüche 1 bis 7, umfassend einen automatischen Lader (14), der zwischen der mindestens einen Schneideinrichtung (13) und dem Trommelöffner mit zwei Trommeln (15) angeordnet ist.

9. System nach einem oder mehreren der Ansprüche 1 bis 8, umfassend eine Einrichtung (16) zum Aufsprühen eines antistatischen Produkts auf die in Bearbeitung befindlichen Abfälle.

10. System nach einem oder mehreren der Ansprüche 1 bis 9, wobei der Trommelöffner mit zwei Trommeln (15) ein Förderband (20) umfasst, das dazu ausgelegt ist, die in Bearbeitung befindlichen Abfälle einer Vielzahl von Zylindern zuzuführen, umfassend ein Paar Einführzylinder (21, 22), ein Paar Aufschließzylinder (23, 24), die einer ersten Trommel (25) zugeordnet und dieser zugewandt sind, eine Vielzahl von ersten Arbeiterzylindern (26, 37, 38), die der ersten Trommel (25) zugeordnet und dieser zugewandt sind, eine Vielzahl von zweiten Arbeiterzylindern (28, 33-36), die einer zweiten Trommel (27) zugeordnet sind, die wiederum der ersten Trommel (25) zugeordnet ist, einen Schwungradzylinder (29), der der zweiten Trommel (27) zugeordnet ist, und einen Kammzylinder (30), der dem Schwungradzylinder (29) zugeordnet ist.

11. System nach einem oder mehreren der Ansprüche 1 bis 10, wobei der mindestens eine Kondensator (31, 32) eine rotierende Metalltrommel (39, 45) umfasst, die an der Außenoberfläche perforiert ist und mit Saugmitteln und Sammelmitteln versehen ist, die dazu ausgelegt sind, die Staubrückstände der Abfälle von der Oberfläche des Metallzylinders zu einem Sammeltrichter (40, 48) zu befördern.

12. System nach dem vorhergehenden Anspruch, wobei die Sammelmittel ein rotierendes Entladepad (42) umfassen.

13. System nach einem oder mehreren der Ansprüche 1 bis 12, wobei der Autoklav von dem Typ ist, der verwendet wird, um Hochdruck- und Hochtemperaturbehandlungen von Textilverarbeitungsabfällen, Schnittresten aus der Textilbekleidungsherstellung und Textilfasern durchzuführen.

14. Verfahren zur Regenerierung von Bekleidungsherstellungsabfällen, die synthetische Fasern und Kunststoffmaterial enthalten, umfassend eine erste chemische Behandlung und eine anschließende zweite mechanische Behandlung der Bekleidungsherstellungsabfälle; wobei die erste chemische Behandlung ein alkalisches Bad in einem Autoklaven, ein Zentrifugieren und ein Trocknen umfasst; wobei die zweite mechanische Behandlung einen Zerfaserungs- und Aufschließschritt und einen Schritt des Entfernens der Rückstände des Kunststoffmaterials umfasst.

15. Verfahren nach dem vorhergehenden Anspruch, wobei der Zerfaserungs- und Aufschließschritt durch einen Trommelöffner mit zwei Trommeln (15) ausgeführt wird und wobei der Schritt des Entfernens der Rückstände des Kunststoffmaterials durch mindestens einen Kondensator (31) ausgeführt wird.

## Revendications

1. Système de régénération de déchets de fabrication de vêtements comprenant des fibres synthétiques et/ou artificielles et de matière plastique, comprenant un premier appareil pour un premier traitement chimique desdits déchets et un deuxième appareil pour un deuxième traitement mécanique ultérieur desdits déchets, dans lequel ledit premier appareil comprend un autoclave (10) adapté pour traiter lesdits déchets immergés dans un bain liquide alcalin, une centrifugeuse (11) adaptée pour extraire des déchets au moins une partie dudit liquide dont les déchets sont imprégnés, et un dispositif de séchage (12) adapté pour éliminer le résidu dudit liquide desdits déchets, et ledit deuxième appareil comprend une ouvreuse à deux tambours (15) adaptée pour effilocher et réduire en pâte lesdits déchets, et au moins un condenseur (31) adapté pour retirer les résidus de ladite matière plastique desdits déchets.

2. Système selon la revendication 1, dans lequel ledit deuxième appareil comprend deux condenseurs (31, 32) disposés en cascade.

3. Système selon une ou plusieurs des revendications 1 à 2, dans lequel ledit bain alcalin est **caractérisé par** un rapport de bain, défini comme le rapport pondéral de la quantité de liquide de bain sur la quantité de déchets à traiter immergés dans le bain, compris entre 1:5 et 1:20.

4. Système selon une ou plusieurs des revendications 1 à 3, dans lequel la température de fonctionnement dudit autoclave (10) est supérieure ou égale à 100 °C.

5. Système selon une ou plusieurs des revendications 1 à 4, dans lequel ledit dispositif de séchage (12) comprend un séchoir à air chaud statique.

6. Système selon une ou plusieurs des revendications 1 à 4, dans lequel ledit dispositif de séchage (12) comprend un sécheur libre qui fonctionne en continu.

7. Système selon une ou plusieurs des revendications 1 à 6, comprenant au moins un dispositif de coupe (13) disposé en amont de ladite ouvreuse à deux tambours (15) et adapté pour couper et casser lesdits déchets en fragments.

8. Système selon une ou plusieurs des revendications 1 à 7, comprenant un chargeur automatique (14) disposé entre ledit au moins un dispositif de coupe (13) et ladite ouvreuse à deux tambours (15).

9. Système selon une ou plusieurs des revendications 1 à 8, comprenant un dispositif (16) pour pulvériser un produit antistatique sur lesdits déchets en cours de traitement.

10. Système selon une ou plusieurs des revendications 1 à 9, dans lequel ladite ouvreuse à deux tambours (15) comprend une bande transporteuse (20) adaptée pour fournir les déchets en cours de traitement à une pluralité de cylindres comprenant une paire de cylindres introducteurs (21, 22), une paire de cylindres défibreurs (23, 24) associés à et faisant face à un premier tambour (25), une pluralité de premiers cylindres travailleurs (26, 37, 38) associés à et faisant face audit premier tambour (25), une pluralité de deuxièmes cylindres travailleurs (28, 33 - 36) associés à un deuxième tambour (27) à son tour associé audit premier tambour (25), un cylindre volant (29) associé audit deuxième tambour (27), et un cylindre peigneur (30) associé audit cylindre volant (29).

11. Système selon une ou plusieurs des revendications 1 à 10, dans lequel ledit au moins un condenseur (31, 32) comprend un tambour métallique rotatif (39, 45) perforé sur la surface externe et pourvu de moyens d'aspiration et de moyens de collecte adaptés pour acheminer les résidus de poussière des déchets de la surface du cylindre métallique à une trémie de collecte (40, 48).

12. Système selon la revendication précédente, dans lequel lesdits moyens de collecte comprennent un patin de déchargement rotatif (42).

13. Système selon une ou plusieurs des revendications 1 à 12, dans lequel ledit autoclave est du type utilisé pour réaliser des traitements à haute pression et à haute température de déchets de transformation textile, de découpes de fabrication de vêtements textiles et de fibres textiles.

14. Procédé de régénération de déchets de fabrication de vêtements comprenant des fibres synthétiques et de matière plastique, comprenant un premier traitement chimique et un deuxième traitement mécanique ultérieur desdits déchets de fabrication de vêtements ; ledit premier traitement chimique comprenant un bain alcalin dans un autoclave, une centrifugation et un séchage ; ledit deuxième traitement mécanique comprenant une étape d'effilochage et de réduction en pâte et une étape d'élimination des résidus de ladite matière plastique.

15. Procédé selon la revendication précédente, dans lequel ladite étape d'effilochage et de réduction en pâte est réalisée par une ouvreuse à deux tambours (15) et dans lequel ladite étape d'élimination des résidus de ladite matière plastique est réalisée par au moins un condenseur (31).
